# EUROPÄISCHE PATENTSCHRIFT

(11) **EP 0 682 401 B1**
(45) Veröffentlichungstag und Bekanntmachung des Hinweises auf die Patenterteilung: **27.05.1998**
(21) Anmeldenummer: 95106488.0
(22) Anmeldetag: 28.04.1995
(51) Int. Cl.: H02M 7/5395

(54) **Einrichtung zur Begrenzung der Änderungsgeschwindigkeit der ausgangsseitigen Spannung eines selbstgeführten Umrichters**
Limiting device for the output voltage slope of a self-commutated converter
Dispositif pour la limitation de la pente de la tension de sortie d'un convertisseur auto-commuté

(30) Priorität: 11.05.1994 CH 1462/94
(43) Veröffentlichungstag der Anmeldung: 15.11.1995
(73) Patentinhaber: SCHAFFNER ELEKTRONIK AG, CH-4708 Luterbach (CH)
(72) Erfinder: Süsse, Heinz, D-59581 Warstein (DE); Stitz, Ullrich, D-59581 Warstein (DE)
(74) Vertreter: Dittrich, Horst, Dr.

(56) Entgegenhaltungen:
- DE-A- 3 318 480
- DE-A- 4 135 680
- DE-U- 9 307 806
- PATENT ABSTRACTS OF JAPAN vol. 13, no. 295 (E-783) 7. Juli 1989 & JP-A-01 074 070 (MITSUBISHI ELECTRIC) 20. März 1989
- PATENT ABSTRACTS OF JAPAN vol. 12, no. 13 (E-573) 14. Januar 1988 & JP-A-62 171 462 (FUJI ELECTRIC) 28. Juli 1987
- PATENT ABSTRACTS OF JAPAN vol. 14, no. 190 (E-918) 18. April 1990 & JP-A-02 036 795 (MITSUBISHI ELECTRIC) 6. Februar 1990
- PATENT ABSTRACTS OF JAPAN vol. 18, no. 345 (E-1571) 29. Juni 1994 & JP-A-06 086 563 (MITSUBISHI ELECTRIC) 25. März 1994
- PATENT ABSTRACTS OF JAPAN vol. 9, no. 258 (E-350) 16. Oktober 1985 & JP-A-60 106 370 (FUJI DENKI SEIZO) 11. Juni 1985

## Beschreibung

Die vorliegende Erfindung liegt auf dem Gebiet der Frequenzumrichter oder Wechselrichter, die seit einigen Jahren verstärkt zur Drehzahlregelung von Drehfeldmaschinen eingesetzt werden. Dabei werden vorwiegend sogenannte U-Wechselrichter mit einem Gleichspannungs-Zwischenkreis verwendet. Der letztere bildet aus der normalerweise konstanten Netzspannung eine Gleichspannung. Diese wird im Wechselrichter mittels Leistungshalbleiterschaltern geschaltet, wodurch das gewünschte dreiphasige Drehstromnetz mit veränderlicher Spannung und Frequenz bereitgestellt wird.

Als Leistungshalbleiter werden beispielsweise FET's oder IGBT's (Feldeffekt- bzw. Insulated-Gate-Bipolar-Transistoren) verwendet, also Bauteile, die zur Erzielung eines möglichst hohen Wirkungsgrades sehr schnell und mit sehr steilen Spannungsanstiegszeiten der Impulse arbeiten. Diese an sich vorteilhafte Eigenschaft führt zu folgenden Problemen beim Betrieb dieser Umrichter:
- Unzulässig hohe Beanspruchung der Isolation angeschlossener Drehfeldmaschinen durch sehr steile Spannungsimpulse (du/dt-Belastung): Insbesondere bei kürzeren Anschlusskabeln zu den angeschlossenen Drehfeldmaschinen gelangen sehr steile Spannungsimpulse an deren Wicklungsisolation. Dies führt zu einer ständig sehr hohen Umpolarisation innerhalb der Isolation, die zu Ausfällen aufgrund von Ermüdungserscheinungen der Wicklungsisolation und somit zur Reduzierung der Lebensdauer von Drehfeldmaschinen führt.
- Unzulässig hohe Beanspruchung der Isolation angeschlossener Drehfeldmaschinen durch Überspannungen bei längeren Anschlusskabeln: Je nach Leitungslänge zwischen Umrichter und Drehfeldmaschinen können infolge von Signallaufzeiten und Reflexionen der Impulse Überpannungen auftreten, die mehr als das Doppelte der Zwischenkreisspannung betragen können. dies führt ebenfalls zu einer unzulässigen Belastung der Wicklungsisolation, die die Lebensdauer eines Antriebs erheblich reduzieren kann.
- Unzulässige Beeinflussung oder Funktionsbeeinträchtigung benachbarter Baugruppen oder von zum Verbindungskabel zwischen Umrichter und Drehmaschinen parallel geführten Kabeln: Bedingt durch die physikalische Arbeitsweise der Umrichter, d. h. durch die sehr kurzen Spannungs-Anstiegs- und -Abfallzeiten der Impulse, können über die kapazitive und induktive Kopplung sowie über Abstrahlung Beeinflussungen, insbesondere Fehlfuntktionen oder Ausfälle, benachbarter elektrischer Baugruppen oder Geräte auftreten. Die vom Umrichter erzeugten Spannungsimpulse wirken nicht nur zwischen den angeschlossenen Leitungsadern (symmetrische Spannungen), sondern es treten auch Spannungssprünge gegenüber dem Erdpotential auf (unsymmetrische oder asymmetrische Störspannungen). Dies führt zu parasitären Störströmen im Erdungssystem, welche bei einem schlecht ausgeführten Erdungssystem benachbarte Baugruppen oder Kabel störend beeinflussen können.

Häufig werden zur Erfüllung der Normen bezüglich Störfestigkeit und Funkentstörung zwischen Umrichter und Drehmaschinen geschirmte Verbindungskabel eingesetzt, durch welche die kapazitive Kopplung und damit die Beeinflussbarkeit benachbarter Kabel und Baugruppen reduziert werden soll. Dabei treten aber infolge der Koppelkapazität der geschirmten Verbindungskabel, das ist die Kapazität zwischen Einzeladern und Schirm, hochfrequente Ströme auf, welche im Kabelschirm fliessen und über magnetische Kopplung Störströme in benachbarten Kabeln induzieren, was zu Beeinflussungen führen kann. Ausserdem kann sich aufgrund der hochfrequenten Ströme und der Länge des Kabels ein Teil der vorhandenen Störenergie in Form von Abstrahlung vom Kabel lösen und benachbarte Baugruppen und Geräte unzulässig beeinflussen. Dieser Effekt tritt natürlich auch bei ungeschirmten Kabeln auf.
- Unzulässige Beanspruchung der Leistungshalbleiter im Umrichter durch die ausgangsseitig angeschlossenen Leitungen zu den Drehfeldmaschinen: Bei längeren Verbindungskabeln zwischen Umrichter und Drehmaschinen werden die Leistungshalbleiter durch die Kabelkapazität zusätzlich mit Auf- und Entladeströmen belastet, welche der Umrichter zusätzlich zu den erforderlichen Betriebsströmen der Drehmaschinen liefern muss. Diese zusätzliche Belastung steigt umso mehr, je höher die Schaltfrequenz des Umrichters gewählt wird. Da heutige Umrichter zumeist kurzschlussfest sind oder zumindest über eine Stromregelung verfügen, muss für Anwendungen mit längeren Verbindungskabeln ein Umrichter gewählt werden, der diesen zusätzlichen symmetrischen Strom zwischen den Leitungen ungefährdet verarbeiten kann. Das bedeutet für den Anwender, dass er eventuell einen erheblich leistungsstärkeren und teureren Umrichter verwenden muss.

Bei geschirmten Verbindungskabeln kommt es schon bei mittleren Kabellängen zu unzulässigen Belastungen der Leistungshalbleiter, indem durch die Koppelkapazität des Kabelschirms unsymmetrische Ströme auftreten, welche die Leistungshalbleiter zusätzlich belasten.

Die Erfindung betrifft nun eine Schaltungsanordnung zur Begrenzung der Änderungsgeschwindigkeit der ausgangsseitigen Spannung eines über einen Gleichspannungs-Zwischenkreis selbstgeführten mehrphasigen Umrichters in Brückenschaltung, welcher Ausgangsklemmen für den Anschluss von mindestens einer Drehfeldmaschine sowie eine zwischen jeder Ausgangsklemme und der mindestens einen Drehfeldmaschine angeordnete Induktivität aufweist, wobei den Induktivitäten ein Kapazitätsnetzwerk mit mehreren Strängen nachgeschaltet ist und jede der spannungsführenden Leitungen zwischen den Induktivitäten und der mindestens einen Drehfeldmaschine an einen der Stränge des Kapazitätsnetzwerks geführt ist.

Bei einer in der DE-A-41 35 680 beschriebenen Einrichtung dieser Art sind die Induktivitäten sogenannte Stromanstiegsbegrenzungsdrosseln, denen drei Diodenzweige mit je zwei Dioden nachgeschaltet sind. Die Stromanstiegsbegrenzungsdrosseln sind jeweils an das den Kathodenanschluss der einen Diode mit dem Anodenanschluss der anderen Diode eines Diodenzweigs verbindende Leitungsstück angeschlossen.

Diese bekannte Einrichtung kann zwar einige der vorstehend aufgezählten Probleme, insbesondere die Beanspruchung der Isolation der angeschlossenen Drehfeldmaschinen durch steile Spannungsimpulse oder die Beanspruchung der Leistungshalbleiter durch die Verbindungskabel, merklich reduzieren, sie ist aber hinsichlich anderer Probleme praktisch unwirksam. Dies hängt damit zusammen, dass diese Einrichtung im wesentlichen nur auf die symmetrischen Spannungen, also auf die Spannungen zwischen den spannungsführenden Leitungen, wirkt und die unsymmetrischen Spannungen praktisch nicht beeinflußt.

Durch die Erfindung soll eine Einrichtung der genannten Art angegeben werden, die sowohl auf symmetrische als auch auf unsymmetrische Störspannungen wirkt und dadurch die eingangs genannten Probleme beseitigt oder zumindest ganz wesentlich reduziert.

Die erfindungsgemässe Lösung dieser Aufgabe ist dadurch gekennzeichnet, dass zwischen jeder Ausgangsklemme und der mindestens einen Drehfeldmaschine zwei Induktivitäten, und zwar eine weitestgehend lineare Längsdrossel und eine stromkompensierte Drossel geschaltet sind.

Die erfindungsgemässe Einrichtung reduziert die Anstiegs- und Abfallflanken der vom Umrichter erzeugten Spannungsimpulse,wodurch die Probleme mit der Beanspruchung der Isolation der Drehfeldmaschinen auf ein sinnvolles Mass reduziert werden. Gleichzeitig wirkt sie auf die unsymmetrischen Spannungen gegenüber dem Erdpotential, wodurch auch die durch diese unsymmetrischen Spannungen verursachten Störungen ausgeschaltet oder zumindest weitgehend reduziert werden.

Im folgenden wird die Erfindung anhand von Ausführungsbeispielen und der Zeichnungen näher erläutert; dabei zeigt:
- Fig. 1, 2: je eine Einrichtung zur Begrenzung der Änderungsgeschwindigkeit der Ausgangsspannung bei selbstgeführten Umrichtern nach dem Stand der Technik; und
- Fig. 3, 4: je ein Ausführungsbeispiel einer erfindungsgemässen Lösung einer Einrichtung der in Fig. 1 gezeigten Art.

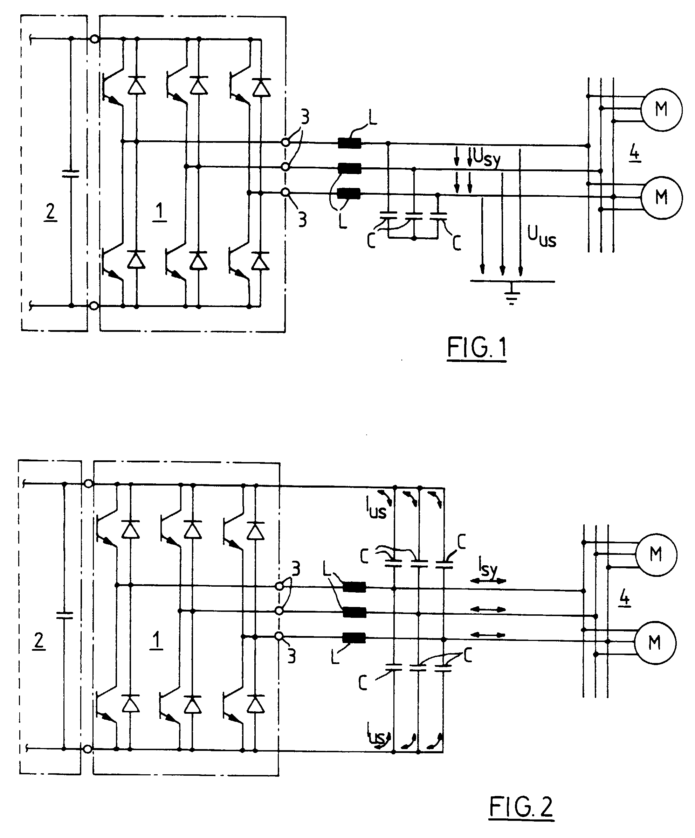

Fig. 1 zeigt einen zur Drehzahlregelung von Drehfeldmaschinen vorgesehenen Wechselrichter oder Frequenzumrichter 1, der an einen durch einen Kondensator symbolisierten Gleichspannungs-Zwischenkreis 2 angeschlossen ist. Dieser ist durch einen an das Versorgungsnetz mit üblicherweise konstanter Spannung und konstanter Frequenz angeschlossenen Netzgleichrichter (nicht dargestellt) gespeist. Der Umrichter 1 schaltet die Gleichspannung des Gleichspannungs-Zwischenkreises 2 mittels Leistungshalbleiterschaltern und stellt an seinen Ausgangsklemmen 3 für die angeschlossenen Drehfeldmaschinen 4 (z.B. Motoren M) das gewünschte dreiphasige Drehstromnetz mit veränderlicher Frequenz und Spannung bereit. Wenn in dieser Beschreibung von Drehfeldmaschinen oder von Drehfeldmaschine die Rede ist, dann ist immer beides, sowohl eine einzelne Maschine als auch eine Maschinengruppe, gemeint.

Als Leistungshalbleiterschalter werden beispielsweise FET's oder IGBT's verwendet, die sehr schnell und mit sehr steilen Anstiegsflanken der Impulse arbeiten. Dadurch werden zwar die Verluste im Umrichter 1 möglichst gering gehalten, so dass mit einem sehr hohen Wirkungsgrad gearbeitet werden kann, es ergeben sich aber die vorne in der Beschreibungseinleitung aufgezählten nachteiligen Probleme. Ein Teil davon, und zwar die auf die Spannungen zwischen den spannungsführenden Leitern zurückzuführenden Probleme, lässt sich durch das Einfügen von Induktivitäten L und Kapazitäten C in Form eines LC-Tiefpasses in die Leitung zwischen Umrichter 1 und Drehfeldmaschinen 4 eliminieren. Die dargestellte Schaltung wirkt jedoch fast ausschliesslich auf die symmetrischen Spannungen U_{sy} zwischen den spannungsführenden Leitungen.

Hingegen bleiben bei der in Fig. 1 dargestellten Schaltung die durch Potentialsprünge am Ausgang des Umrichters 1 erzeugten unsymmetrischen Spannungen Uᵤₛ gegenüber dem Erdpotential weitestgehend erhalten. Man könnte zwar theoretisch mit relativ hohen Induktivitätswerten die Spannungsanstiegszeiten wesentlich verlängern, was aber die Verwendung voluminöser und teurer Induktivitäten erfordern würde. Ausserdem würde durch den Einsatz grosser Induktivitäten an diesen ein relativ grosser Spannungsabfall hervorgerufen, der seinerseits die für die Drehfeldmaschine zur Verfügung stehende Spannung reduzieren würde. Damit würde aber die Drehfeldmaschine nicht mehr ihre volle Antriebsleistung erhalten, wodurch das ganze aus Umrichter 1 und Drehfeldmaschine 4 bestehende System in Frage gestellt wäre.

Fig. 2 zeigt eine theoretisch mögliche Variante, die auch die unsymmetrischen Spannungen weitgehend reduziert und somit die vorne diskutierten nachteiligen Eigenschaften der bekannten Umrichter weitgehend beseitigen oder reduzieren könnte. Bei dieser Variante sind an jede Induktivität L zwei im Stern geschaltete Kapazitäten C angeschlossen, und die Sternpunkte sind jeweils mit einem Pol der Zwischenkreisspannung des Umrichters 1 verbunden. Mit dieser Schaltung können sowohl sinusförmige, symmetrische Spannungen erzeugt, als auch die unsymmetrischen Spannungen in ihrer Anstiegs- und Abfallzeit nach unten begrenzt werden. Allerdings müssen die unsymmetrischen Ströme Iᵤₛ in der Rückführung zum Gleichspannungs-Zwischenkreis 2 gering gehalten werden, um nicht die Leistungshalbleiter zusätzlich zu belasten. Auch hier würden wieder relativ hohe Induktivitätswerte benötigt, die zu den schon im Zusammenhang mit Fig. 1 diskutierten Problemen führen würden.

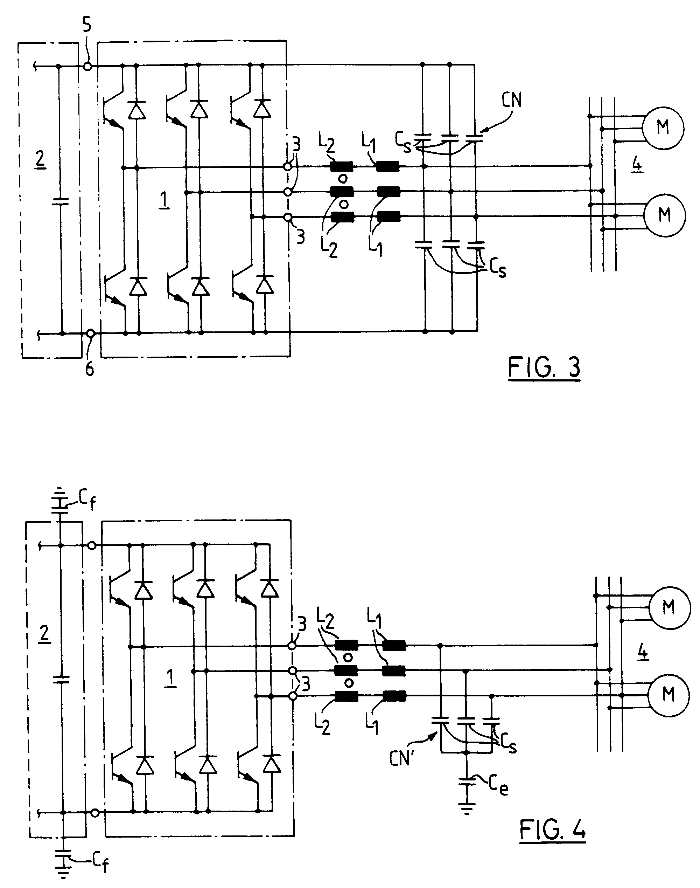

Die in Figur 2 dargestellte Einrichtung vermeidet zwar viele der aufgezählten Nachteile, die praktische Realisierung dieses Ausführungsbeispiels kann aber an wirtschaftlichen und technischen Schwierigkeiten scheitern. Die Figuren 3 und 4 zeigen dagegen technisch und wirtschaftlich machbare Vorschläge zur Lösung der gestellten Aufgabe.

Bei der in Fig. 3 dargestellten Schaltung ist zwischen jeder Ausgangsklemme 3 des Umrichters 1 und der Drehfeldmaschine 4 eine erste Induktivität L₁und eine zweite Induktivität L₂ geschaltet, wobei die Reihenfolge der beiden Induktivitäten nicht von Einfluss ist. Den beiden Induktivitäten, von denen die erste Induktivität L₁ eine sogenannte weitestgehend lineare Längsdrossel und die zweite Induktivität L₂ eine stromkompensierte Drossel ist, ist ein Kapazitätsnetzwerk CN mit drei Strängen nachgeschaltet, von denen jeder aus zwei in Reihe geschalteten Kondensatoren Cₛ besteht. Jede der spannungsführenden Leitungen zwischen den Induktivitäten und der Drehfeldmaschine 4 ist an den Mittelpunkt eines der Stränge des Kapazitätsnetzwerks geführt. Die Anschlussenden der Stränge des Kapazitätsnetzwerks CN sind auf den Plus- oder den Minusanschluss 5 bzw. 6 des Gleichspannungs-Zwischenkreises 2 geführt. Jede erste Induktivität L₁ bildet zusammen mit den beiden Kondensatoren Cₛ des ihr nachgeschalteten Stranges den für die Erzeugung der sinusförmigen Spannung zwischen den spannungsführenden Leitungen zur Drehfeldmaschine 4 erforderlichen LC-Tiefpass. Dieser ist darstellungsgemäss an den Gleichspannungs-Zwischenkreis 2 angebunden.

Stromkompensierte Drosseln sind so ausgebildet, dass sich bei normalem Betriebsstrom (Motorstrom) die im Kern erzeugten magnetischen Flüsse aufheben und die Induktivitäten praktisch wirkungslos sind. Fliessen jedoch unsymmetrische Ströme gegenüber Erdpotential ab oder an den Gleichspannungs-Zwischenkreis 2 zurück, so ist die Summe der gesamten Ströme ungleich, und die magnetischen Flüsse heben sich nicht mehr auf.

Ein besonderer Vorteil dieser stromkompensierten Induktivitäten oder Drosseln liegt darin, dass bei relativ kleinem Bauvolumen hohe Induktivitätswerte erreicht werden können, wobei selbstverständlich die Grösse der Induktivität auf die auftretenden unsymmetrischen Ströme ausgelegt sein muss. Da diese stromkompensierten Drosseln für den normalen Betriebsstrom nur vernachlässigbar geringe Spannungsabfälle erzeugen, kann durch geeignete Dimensionierung des aus einer ersten Induktivität L₁ und den jeweiligen mit dieser verbundenen Kondensatoren Cₛ gebildeten LC-Tiefpasses eine für alle aufgezählten nachteiligen Probleme wirksame kompakte Einrichtung erstellt werden.

Ein weiterer Vorteil der in Fig. 3 dargestellten Schaltung besteht darin, dass bei dieser wegen der Reduzierung der un- oder asymmetrischen Störspannungen auf die sonst erforderlichen teuren geschirmten Verbindungskabel zwischen Umrichter und Motor verzichtet werden kann, woraus sich eine nicht unerhebliche Reduktion der Installationskosten ergibt.

In Fig. 4 ist ein weiteres Ausführungsbeispiel einer Schaltung für eine technisch und wirtschaftlich machbare Lösung der genannten Probleme dargestellt. Auch bei dieser Schaltung ist so wie bei der von Fig. 3 zwischen jeder Ausgangsklemme 3 des Umrichters 1 und der Drehfeldmaschine 4 eine erste Induktivität (lineare Längsdrossel) L₁ und eine zweite Induktivität (stromkompensierte Drossel) L₂ geschaltet, denen ein Kapazitätsnetzwerk CN' nachgeschaltet ist. Dieses unterscheidet sich von dem in Fig. 3 dargestellten Kapazitätsnetzwerk CN dadurch, dass seine drei Stränge nur je einen Kondensator Cₛ enthalten und zu einem Sternpunkt zusammengeführt sind. Dieser ist zur Ableitung der unsymmetrischen Ströme über eine weitere Kapazität Cₑ zum Erdpotential geschaltet. Auch eine A-Schaltung des Kapazitätsnetzwerks CN mit Anschaltung von einem oder drei Kondensatoren zum Erdpotential ergibt eine gleichwertige Lösung.

Darstellungsgemäss können zur Verringerung von Funk-Entstörproblemen auch vom Gleichspannungs-Zwischenkreis 2 zum Erdpotential Kondensatoren C_{f} geschaltet sein. In diesem Fall können also unsymmetrische Stöme über die Kondensatoren Cₛ, Cₑ und C_{f} fliessen.

## Patentansprüche

1. Schaltungsanordnung zur Begrenzung der Änderungsgeschwindigkeit der ausgangsseitigen Spannung eines über einen Gleichspannungs-Zwischenkreis selbstgeführten mehrphasigen Umrichters in Brückenschaltung, welcher Ausgangsklemmen für den Anschluss von mindestens einer Drehfeldmaschine sowie eine zwischen jeder Ausgangsklemme und der mindestens einen Drehfeldmaschine angeordnete Induktivität aufweist, wobei den Induktivitäten ein Kapazitätsnetzwerk mit mehreren Strängen nachgeschaltet ist, und jede der spannungsführenden Leitungen zwischen den Induktivitäten und der mindestens einen Drehfeldmaschine an einen der Stränge des Kapazitätsnetzwerks geführt ist, dadurch gekennzeichnet, dass zwischen jeder Ausgangsklemme (3) und der mindestens einen Drehfeldmaschine (4) zwei Induktivitäten, und zwar eine weitestgehend lineare Längsdrossel (L₁) und eine stromkompensierte Drossel (L₂) geschaltet sind.

2. Anordnung nach Anspruch 1, dadurch gekennzeichnet, dass die lineare Längsdrossel (L₁) und die stromkompensierte Drossel (L₂) in Reihe geschaltet sind, wobei die Reihenfolge beliebig ist.

3. Anordnung nach Anspruch 2, dadurch gekennzeichnet, dass jeder Strang des Kapazitätsnetzwerks (CN) zwei in Reihe geschaltete Kondensatoren (Cₛ) enthält und dass jede der spannungsführenden Leitungen zwischen den Drosseln (L₁, L₂) und der mindestens einen Drehfeldmaschine (4) an den Mittelpunkt eines der genannten Stränge geführt ist.

4. Anordnung nach Anspruch 3, dadurch gekennzeichnet, dass die Anschlussenden der Stränge des Kapazitätsnetzwerks (CN) auf den Plus- oder den Minusanschluss (5 bzw. 6) des Gleichspannungs-Zwischenkreises (2) geführt sind.

5. Anordnung nach Anspruch 2, dadurch gekennzeichnet, dass jeder Strang des Kapazitätsnetzwerks (CN') einen Kondensator (Cₛ) enthält und an seinem einen Ende von einer der spannungsführenden Leitungen zwischen den Drosseln (L₁, L₂) und der mindestens einen Drehfeldmaschine (4) abzweigt und mit seinem anderen Ende auf einen gemeinsamen Sternpunkt geführt ist, und dass dieser Sternpunkt über einen weiteren Kondensator (Cₑ) mit dem Erdpotential verbunden ist.

6. Anordnung nach Anspruch 2, dadurch gekennzeichnet, dass die Stränge des Kapazitätsnetzwerks (CN) in Form einer Δ-Schaltung angeordnet sind, und dass dieser A-Schaltung mindestens ein weiterer Kondensator zum Erdpotential angeschaltet ist.

7. Anordnung nach Anspruch 5 oder 6, dadurch gekennzeichnet, dass zwischen den Anschlüssen des Gleichspannungs-Zwischenkreises (2) und dem Erdpotential zusätzliche Kondensatoren (C_{f}) geschaltet sind.

## Claims

1. Circuit arrangement for limiting the rate of change of the output voltage of a polyphase converter in a bridge circuit which is self-commutated by means of a direct-voltage intermediate circuit and which has output terminals for the connection of at least one polyphase machine and also an inductance disposed between every output terminal and the at least one polyphase machine, a capacitance network having a plurality of phases being connected downstream of the inductances and each of the voltage-carrying lines between the inductances and the at least one polyphase machine being connected to one of the phases of the capacitance network, characterized in that two inductances, and specifically, an extremely linear series choke (L₁) and a current-compensated choke (L₂) are connected between every output terminal (3) and the at least one polyphase machine (4).

2. Arrangement according to Claim 1, characterized in that the linear series choke (L₁) and the current-compensated choke (L₂) are connected in series, the sequence being random.

3. Arrangement according to Claim 2, characterized in that each phase of the capacitance network (CN) contains two capacitors (Cₛ) connected in series and in that each of the voltage-carrying lines is connected to the centre point of one of the said phases between the chokes (L₁, L₂) and the at least one polyphase machine (4).

4. Arrangement according to Claim 3, characterized in that the terminal ends of the phases of the capacitance network (CN) are connected to the positive terminal or negative terminal (5 or 6, respectively) of the direct-voltage intermediate circuit.

5. Arrangement according to Claim 2, characterized in that each phase of the capacitance network (CN') contains a capacitor (Cₛ) and, at its one end, branches from one of the voltage-carrying lines between the chokes (L₁, L₂) and the at least one polyphase machine (4) and is connected by means of its other end to a common star point, and in that said star point is connected to earth potential via a further capacitor (Cₑ).

6. Arrangement according to Claim 2, characterized in that the phases of the capacitance network (CN) are disposed in the form of a Δ-circuit, and in that at least one further capacitor connected to earth potential is connected to said Δ-circuit.

7. Arrangement according to Claim 5 or 6, characterized in that additional capacitors (C_{f}) are connected between the terminals of the direct-voltage intermediate circuit (2) and the earth potential.

## Revendications

1. Montage pour limiter la vitesse de variation de la tension de sortie d'un convertisseur multiphases en circuit en pont, à commutation automatique par l'intermédiaire d'un circuit intermédiaire de tension continue, qui comporte des bornes de sortie pour le raccordement d'au moins un générateur à induction, ainsi qu'une inductance montée entre chaque borne de sortie et le au moins un générateur à induction, un réseau de capacité à plusieurs branches étant monté en aval des inductances, et chacune des lignes de tension entre les inductances et le au moins un générateur à induction étant amenée à l'une des branches du réseau de capacité, caractérisé en ce qu'il est branché entre chaque borne (3) de sortie et le au moins un générateur (4) à induction deux inductances, et en fait une bobine (L1) longitudinale dans une grande mesure linéaire et une bobine (L2) compensée en courant.

2. Dispositif suivant la revendication 1, caractérisé en ce que la bobine (L1) longitudinale linéaire et la bobine (L2) compensée en courant sont montées en série, l'ordre étant quelconque.

3. Dispositif suivant la revendication 2, caractérisé en ce que chaque branche du réseau (CN) de capacité contient deux condensateurs (Cs) montés en série et en ce que chacune des lignes de tension entre les bobines (L1, L2) et le au moins un générateur 14, à induction est amenée au milieu de ladite branche.

4. Dispositif suivant la revendication 3, caractérisé en ce que les extrémités de raccordement des branches du réseau (CN) de capacité sont amenées à la borne (5) plus ou à la borne (6) moins du circuit (2) intermédiaire de tension continue.

5. Dispositif suivant la revendication 2, caractérisé en ce que chaque branche du réseau (CN') de capacité contient un condensateur et en ce qu'elle bifurque à l'une de ses extrémités de l'une des lignes de tension entre les bobines (L1, L2) et le au moins au générateur (4) à induction et en ce qu'elle va par son autre extrémité à un point neutre commun, et en ce que ce point neutre est relié au potentiel de terre par l'intermédiaire d'un condensateur (Ce) supplémentaire.

6. Dispositif suivant la revendication 2, caractérisé en ce que les branches du réseau (CN) de capacité sont disposées en un montage en triangle, et en ce qu'un condensateur supplémentaire allant au potentiel de terre est raccordé à ce montage en triangle.

7. Dispositif suivant la revendication 5 ou 6, caractérisé en ce qu'il est branché des condensateurs (Cf) supplémentaires entre les bornes du circuit (2) intermédiaire de tension continue et le potentiel de terre.
